# EUROPEAN PATENT SPECIFICATION

(11) **EP 3 111 083 B1**
(45) Date of publication and mention of the grant of the patent: **18.03.2020**
(21) Application number: 14830895.0
(22) Date of filing: 10.12.2014
(51) Int. Cl.: F03D 1/06, F16B 37/12

(54) **BUSHING INTENDED FOR CONNECTING A BLADE ROOT OF A WIND TURBINE BLADE DIRECTLY OR INDIRECTLY TO A HUB OF A TURBINE**
BUCHSE ZUR DIREKTEN ODER INDIREKTEN VERBINDUNG EINES SCHAUFELFUSSES EINER WINDTURBINENSCHAUFEL AN EINE NABE EINER TURBINE
COUSSINET CONÇU POUR RELIER UNE RACINE DE PALE D'UNE PALE DE TURBINE ÉOLIENNE DIRECTEMENT OU INDIRECTEMENT À UN MOYEU D'UNE TURBINE

(30) Priority: 25.02.2014 NL 2012326
(43) Date of publication of application: 04.01.2017
(73) Proprietor: Viventus Holding B.v., 7609 RG Almelo (NL); E.J.H. Kuipers B.V., 7609 ZC Almelo (NL)
(72) Inventor: KUIPERS, Edo Johannes Hendrikus, NL-7609 ZC Almelo (NL)
(74) Representative: Mink-Lindenburg, Charlotte Hildegard
(86) International application number: PCT/NL2014/050849
(87) International publication number: WO 2015/130162

(56) References cited:
- WO-A1-2010/149806
- FR-A- 1 189 501
- US-A- 3 370 631
- US-A1- 2011 158 766

## Description

The invention relates to a bushing for connecting a blade root of a wind turbine blade directly or indirectly to a hub of a turbine, comprising an elongate body for permanent integration into the blade root by casting, infusion or lamination during production of the wind turbine blade, wherein the body is provided with a hollow space which extends at least partially from a first outer end of the body in the longitudinal direction of the body, and the hollow space is provided at least partially on the periphery with screw thread for mounting the blade root on the hub by means of a bolt, wherein the body comprises in longitudinal direction two preferably cylindrically symmetric parts which both extend in longitudinal direction of the body, the first part of which has a constant outer diameter D1 and a width W1 and extends from the first side of the body, and a second part of which is adjacent to the first part and has a width W2 and an outer diameter decreasing in the direction of a second outer end of the body, wherein the outer diameter of the second part decreases from D1 to D2, wherein D1 > D2.

The bushing according to the preamble is known in the field and also disclosed in WO 2010/149806 A1.

Many of the known bushings are cast, infused or laminated during production of the wind turbine blade into the peripheral edge of the blade root, which in most cases has a cylindrical section. The wind turbine blade is connected to the hub using the bolts which engage on the bushings.

In the known bushing (D1 - D2) / (2 x W2) is about 0.25, this corresponding to an inclination of the second part of the body of 14 degrees.

It has been found in practice that this inclination results in a higher shear stress at the edge of the bushing (first outer end of the body). This causes a problem, particularly for turbines larger than 1.5 MW both onshore and offshore, since more bolts are desirable or necessary with a given hub or smaller diameter. The typical bolts applied here are M24-M27-M30-M36-M42-M48. The higher shear stress is present particularly when the bushing protrudes slightly from the blade root (triaxial glass laminate). A higher shear stress can thus already occur when the bushing protrudes 1-5 mm out of the blade root.

The invention has for its object to provide a bushing with a lower shear stress than the known bushing.

The bushing according to the invention has for this purpose the feature that 0.083 <= (D1 - D2) / (2 x W2) <= 0.176. The inclination of the second part of the body hereby lies between 4.74 and 10 degrees. This inclination results in a considerably lower shear stress than in the known bushing.

The second part preferably has a constantly decreasing outer diameter.

D1 is preferably less than or equal to the maximum diameter Dmax of the body.

In a practical embodiment of the bushing according to the invention W1 amounts to a maximum of 5% of the total length of the body. At a normal length of 396 mm (for a bolt of size M36) of the bushing, W1 is a maximum of 19.8 mm, though preferably 18 mm. From the first 18 mm of the bushing a ∼4-8 mm is removed by the manufacturer, whereby a constant part of 10-14 mm remains in the wind turbine blade. The value of 10 mm is the minimum necessary for a good load introduction.

For a proper load transfer from composite material to the hub connection, the root has to be flattened with expensive milling/grinding machines and or expensive tooling. It is an aim of the invention to further reduce the flattening costs and labor costs. This is achieved by providing a bushing according to the invention wherein the bushing is arranged to protrude slightly from the laminate. By protruding the bushing from the laminate, the flattening of the root is much easier compared to known bushings. The flattening of the root can focus on flattening the steel bushing part and not the laminate leading to lower costs for tooling and/or flattening equipment such as expensive milling/grinding machines.
By protruding the bushings from the laminate, shear stresses at the front face will become larger compared to the situation where the bushing is aligned with the laminate. The present invention solves this disadvantage by the shape at the start of the bushing.

As pointed out in PCT WO 03/08/082551 A1 (Aerodyn), the general load carrying capability of a bushing largely depends on the adhesion area between the bushing and the laminate. For a certain load carrying capability a sufficient large bushing area has to be present, which leads to long bushings. Also a high quality of bonding process has to be guaranteed.

In order to decrease the impact of the bonding process quality and/or the use of long bushing, the bushing according to the invention is arranged to provide a mechanically form-closed connection between the laminate and the bushing. In order to provide this mechanically form-closed connection, the bushing is preferably provided with one or more cylindrically symmetric ribs which are situated between the second part and the second outer end of the body. The mechanically form-closed connection provides self locking features and increases the connection strength.

Each rib preferably comprises successively a first, a second and a third rib part here, wherein as seen from the first side of the body the first rib part has an increasing diameter R1 with a diameter between D2 and Dmax, the second rib part has a constant diameter R2 equal to the maximum diameter of the first rib part, and the third rib part has a decreasing diameter R3 with a diameter between R2 and D2.

The first rib part preferably has a width W3 and (R2 - D2) / (2 x W3) is about 1. This corresponds to an inclination of 45 degrees.

The second rib part preferably has a width W4 and (R2 - D2) / (2 x W4) is about 1. This corresponds to an inclination of 45 degrees.

The invention will be further elucidated with reference to the following figures, in which:
Figure 1A shows the known bushing for connecting a blade root of a wind turbine blade directly or indirectly to a hub of a turbine;
Figure 1B shows a longitudinal section through the known bushing;
Figure 2A shows the bushing according to the invention for connecting a blade root of a wind turbine blade directly or indirectly to a hub of a turbine;
Figure 2B shows a longitudinal section through the bushing according to the invention.

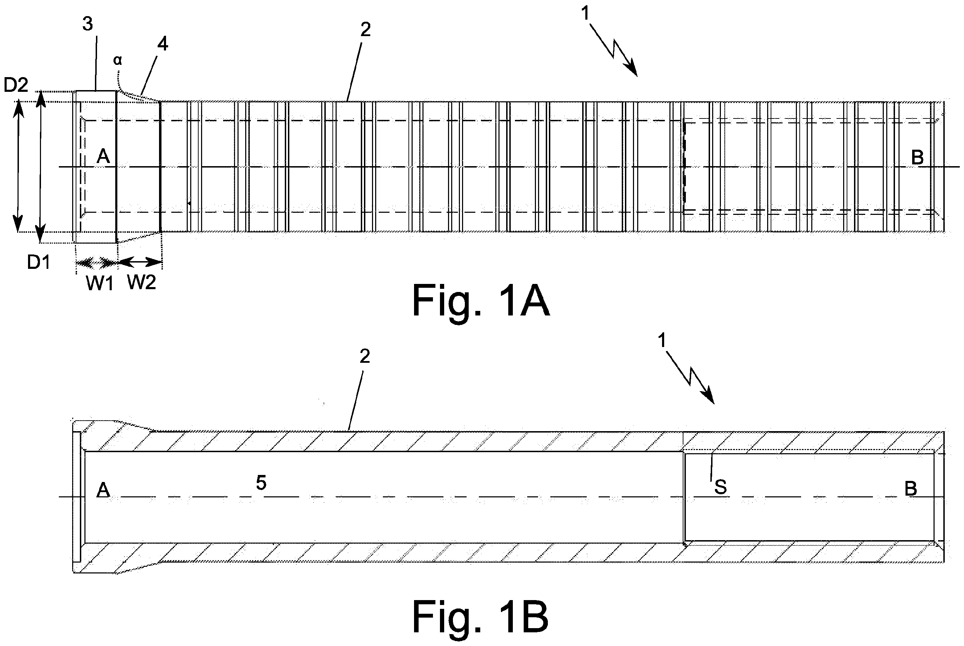

Figure 1A shows a known bushing 1 for connecting a blade root of a wind turbine blade directly or indirectly to a hub of a turbine. Bushing 1 is intended for the purpose of connecting a blade root of a wind turbine blade directly or indirectly to a hub of a turbine. Bushing 1 comprises an elongate body 2 intended for permanent integration into the blade root during production of the wind turbine blade. Body 2 comprises in longitudinal direction two cylindrically symmetric parts 3, 4, both extending in longitudinal direction of body 2. First part 3 has a constant outer diameter D1 and a width W1. First part 3 extends from the first side A of body 2. A second part 4 of body 2 is adjacent to first part 3 and has a width W2. Second part 4 has an outer diameter decreasing in the direction of a second outer end B of body 2, wherein the outer diameter of the second part decreases from D1 to D2. In the known bushing (D1 - D2) / (2 x W2) is about 0.25, this corresponding to an inclination α of the second part of the body of 14 degrees.

Figure 1B shows a longitudinal section through the known bushing 1 according to figure 1. Body 2 is provided with a hollow space 5. Hollow space 5 extends from a first outer end A of the body in the longitudinal direction of body 2 in the direction of second outer end B. Hollow space 5 is partially provided on the periphery with screw thread S for mounting the blade root on the hub by means of a bolt. The bolt is arranged here in bushing 1 via the first side A.

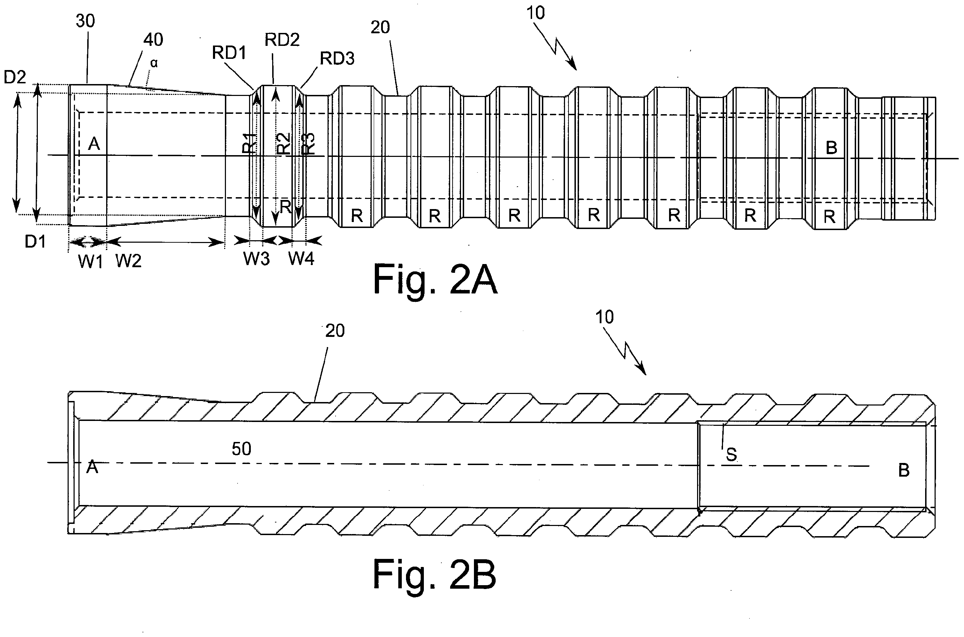

Figure 2A shows the bushing 10 according to the invention for connecting a blade root of a wind turbine blade directly or indirectly to a hub of a turbine. Bushing 10 comprises an elongate body 20 intended for permanent integration into the blade root during production of the wind turbine blade. Body 20 comprises in longitudinal direction two cylindrically symmetric parts 30, 40, both extending in longitudinal direction of body 20. First part 30 has a constant outer diameter D1 and a width W1. First part 30 extends from the first outer end A of body 20. A second part 40 of body 20 is adjacent to first part 30 and has a width W2. Second part 40 has an outer diameter decreasing in the direction of a second outer end B of body 20, wherein the outer diameter of the second part decreases from D1 to D2. In the bushing 10 according to the invention 0.083 <= (D1 - D2) / (2 x W2) <= 0.176. In figure 2 α is about 5 degrees.

Figure 2B shows a longitudinal section through bushing 10 according to the invention. Body 20 is provided with a hollow space 50. Hollow space 50 extends from a first outer end A of body 20 in the longitudinal direction of body 20 in the direction of second outer end B. Hollow space 5 is partially provided on the periphery with screw thread S for mounting the blade root on the hub by means of a bolt. The bolt is arranged here in bushing 10 via the first outer end A. Bushing 10 is provided with a plurality of cylindrically symmetric ribs R situated between second part 40 and second outer end B of the body. Each rib R comprises successively a first RD1, a second RD2 and a third rib part RD3. As seen from the first outer end A of body 20, the first rib part RD1 has an increasing diameter R1 with a diameter between D2 and Dmax (in this case D2). Second part RD2 has a constant diameter R2 equal to the maximum diameter (=D2) of first rib part RD1. Third rib part RD3 has a decreasing diameter R3 with a diameter between R2 and D2. First rib part RD1 has a width W3 and (R2 - D2) / (2 x W3) is about 1. Second rib part RD2 has a width W4 and (R2 - D2) / (2 x W4) is about 1.

The device according to the invention is expressly not limited to the shown embodiment but extends to all conceivable embodiments falling within the following claims.

## Claims

1. Bushing (10) for connecting a blade root of a wind turbine blade directly or indirectly to a hub of a turbine, comprising an elongate body (20) for permanent integration into the blade root by casting, infusion or lamination during production of the wind turbine blade, wherein the body (20) is provided with a hollow space (50) which extends at least partially from a first outer end (A) of the body in the longitudinal direction of the body (20), and the hollow space (50) is provided at least partially on the periphery with screw thread (S) for mounting the blade root on the hub by means of a bolt, wherein the body (20) comprises in longitudinal direction two preferably cylindrically symmetric parts (30,40) which both extend in longitudinal direction of the body (20), the first part (30) of which has a constant outer diameter D1 and a width W1 and extends from the first outer end (A) of the body (20), and a second part (40) of which is adjacent to the first part (30) and has a width W2 and an outer diameter decreasing in the direction of a second outer end (B) of the body (20), wherein the outer diameter of the second part (40) decreases from D1 to D2, wherein D1 > D2, **characterized in that** 0.083 <= (D1 - D2) / (2 x W2) <= 0.176.

2. Bushing (10) as claimed in claim 1, wherein the second part (40) has a constantly decreasing outer diameter.

3. Bushing (10) as claimed in claim 1 or 2, wherein D1 is less than or equal to the maximum diameter Dmax of the body (20).

4. Bushing (10) as claimed in any of the foregoing claims, wherein W1 amounts to a maximum of 5% of the total length of the body (20).

5. Bushing (10) as claimed in any of the foregoing claims, wherein the bushing (10) is provided with one or more cylindrically symmetric ribs (R) which are situated between the second part (40) and the second outer end (B) of the body (20).

6. Bushing (10) as claimed in claim 5, wherein each rib (R) comprises successively a first (RD1), a second (RD2) and a third rib part (RD3), wherein as seen from the first outer end (A) of the body (20) the first rib part (RD1) has an increasing diameter R1 with a diameter between D2 and Dmax, the second rib part (RD2) has a constant diameter R2 equal to the maximum diameter of the first rib part (RD1), and the third rib part (RD3) has a decreasing diameter R3 with a diameter between R2 and D2.

7. Bushing (10) as claimed in claim 6, wherein the first rib part (RD1) has a width W3 and (R2 - D2) / (2 x W3) is about 1.

8. Bushing (10) as claimed in claim 6, wherein the second rib part (RD2) has a width W4 and (R2 - D2) / (2 x W4) is about 1.

## Patentansprüche

1. Buchse (10) zum direkten oder indirekten Verbinden eines Blattfußes eines Windturbinenblattes mit einer Nabe einer Turbine, umfassend einen länglichen Körper (20) zur dauerhaften Integration in den Blattfuß durch Gießen, Eingießen oder Laminieren während der Herstellung des Windturbinenblattes, wobei der Körper (20) mit einem Hohlraum (50) versehen ist, der sich zumindest teilweise von einem ersten äußeren Ende (A) des Körpers in Längsrichtung des Körpers (20) erstreckt, und der Hohlraum (50) zumindest teilweise am Umfang mit einem Schraubengewinde (S) zur Befestigung des Schaufelfußes an der Nabe mittels einer Schraube versehen ist, wobei der Körper (20) in Längsrichtung zwei vorzugsweise zylindrisch symmetrische Teile (30, 40) aufweist, die sich beide in Längsrichtung des Körpers (20) erstrecken, wobei der erste Teil (30) einen konstanten Außendurchmesser D1 und eine Breite W1 aufweist und sich vom ersten äußeren Ende (A) des Körpers (20) aus erstreckt, und einen zweiten Teil (40), der an den ersten Teil (30) angrenzt und eine Breite W2 und einen Außendurchmesser aufweist, der in Richtung eines zweiten äußeren Endes (B) des Körpers (20) abnimmt, wobei der Außendurchmesser des zweiten Teils (40) von D1 nach D2 abnimmt, wobei D1 > D2, **dadurch gekennzeichnet, dass** 0.083 <= (D1 - D2) / (2 x W2) <= 0,176.

2. Buchse (10) nach Anspruch 1, wobei der zweite Teil (40) einen stetig abnehmenden Außendurchmesser hat.

3. Buchse (10) nach Anspruch 1 oder 2, wobei D1 kleiner oder gleich dem maximalen Durchmesser Dmax des Körpers (20) ist.

4. Buchse (10) nach einem der vorstehenden Ansprüche, wobei W1 maximal 5% der Gesamtlänge des Körpers (20) beträgt.

5. Buchse (10) nach einem der vorstehenden Ansprüche, wobei die Buchse (10) mit einer oder mehreren zylindersymmetrischen Rippen (R) versehen ist, die sich zwischen dem zweiten Teil (40) und dem zweiten äußeren Ende (B) des Körpers (20) befinden.

6. Buchse (10) nach Anspruch 5, wobei jede Rippe (R) nacheinander einen ersten (RD1), einen zweiten (RD2) und einen dritten Rippenteil (RD3) aufweist, wobei der erste Rippenteil (RD1), vom ersten äußeren Ende des Körpers (20) aus betrachtet, einen zunehmenden Durchmesser R1 mit einem Durchmesser zwischen D2 und Dmax hat, der zweite Rippenteil (RD2) einen konstanten Durchmesser R2 hat, der gleich dem maximalen Durchmesser des ersten Rippenteils (RD1) ist, und der dritte Rippenteil (RD3) einen abnehmenden Durchmesser R3 mit einem Durchmesser zwischen R2 und D2 hat.

7. Buchse (10) nach Anspruch 6, wobei der erste Rippenteil (RD1) eine Breite W3 hat und (R2 - D2) / (2 x W3) etwa 1 ist.

8. Buchse (10) nach Anspruch 6, wobei der zweite Rippenteil (RD2) eine Breite W4 hat und (R2 - D2) / (2 x W4) etwa 1 beträgt.

## Revendications

1. Manchon (10) pour relier un pied de pale d'éolienne directement ou indirectement à un moyeu d'une turbine, comprenant un corps allongé (20) conçu pour une intégration permanente dans le pied de pale par coulée, infusion ou laminage pendant la fabrication de la pale d'éolienne, le corps (20) étant pourvu d'un espace creux (50) qui s'étend au moins partiellement depuis une première extrémité extérieure (A) du corps dans la direction longitudinale du corps (20), et l'espace creux (50) est pourvu au moins partiellement sur la périphérie d'un filetage (S) pour le montage du pied de pale sur le moyeu au moyen d'un boulon, le corps (20) comprenant en direction longitudinale deux parties (30, 40) de préférence cylindriquement symétriques qui s'étendent toutes deux dans la direction longitudinale du corps (20), la première partie (30) ayant un diamètre extérieur constant D1 et une largeur W1 et s'étendant depuis la première extrémité extérieure (A) du corps (20), et une seconde partie (40) étant adjacente à la première partie (30) et ayant une largeur W2 et un diamètre extérieur qui diminue en direction d'une seconde extrémité extérieure (B) du corps (20), le diamètre extérieur de la seconde partie (40) diminuant de D1 à D2, avec D1 > D2, **caractérisé en ce que** 0,083 <= (D1 - D2) / (2 x W2) <= 0,176.

2. Manchon (10) selon la revendication 1, dans lequel la seconde partie (40) a un diamètre extérieur constamment décroissant.

3. Manchon (10) selon la revendication 1 ou 2, dans lequel D1 est inférieur ou égal au diamètre maximum Dmax du corps (20).

4. Manchon (10) selon l'une des revendications précédentes, dans lequel W1 vaut au maximum 5% de la longueur totale du corps (20).

5. Manchon (10) selon l'une quelconque des revendications précédentes, dans lequel le manchon (10) est muni d'une ou plusieurs nervures (R) cylindriquement symétriques qui sont situées entre la deuxième partie (40) et la deuxième extrémité extérieure (B) du corps (20).

6. Manchon (10) selon la revendication 5, dans lequel chaque nervure (R) comprend successivement une première (RD1), une deuxième (RD2) et une troisième partie de nervure (RD3), où, vue depuis la première extrémité extérieure (A) du corps (20), la première partie de nervure (RD1) a un diamètre croissant (R1) avec un diamètre compris entre D2 et Dmax, la deuxième partie de nervure (RD2) a un diamètre constant R2 égal au diamètre maximum de la première partie de nervure (RD1), et la troisième partie de nervure (RD3) a un diamètre décroissant R3 avec un diamètre compris entre R2 et D2.

7. Manchon (10) selon la revendication 6, dans lequel la première partie de nervure (RD1) a une largeur W3 et (R2 - D2) / (2 x W3) vaut environ 1.

8. Manchon (10) selon la revendication 6, dans lequel la deuxième partie de nervure (RD2) a une largeur W4 et (R2 - D2) / (2 x W4) vaut environ 1.
